# EUROPEAN PATENT SPECIFICATION

(11) **EP 3 711 904 B1**
(45) Date of publication and mention of the grant of the patent: **08.05.2024**
(21) Application number: 20154065.5
(22) Date of filing: 28.01.2020
(51) Int. Cl.: B25H 3/02

(54) **TOOLBOX AND CHARGING SYSTEM**
WERKZEUGKASTEN UND LADESYSTEM
BOÎTE À OUTILS ET SYSTÈME DE CHARGEMENT

(30) Priority: 05.02.2019 JP 2019019085
(43) Date of publication of application: 23.09.2020
(73) Proprietor: Panasonic Intellectual Property Management Co., Ltd., Osaka-shi, Osaka 540-6207 (JP)
(72) Inventor: SATO, Masahiro, Osaka-shi, Osaka 540-6207 (JP); MURUI, Itaru, Osaka-shi, Osaka 540-6207 (JP); SUGIE, Sho, Osaka-shi, Osaka 540-6207 (JP)
(74) Representative: Müller-Boré & Partner Patentanwälte PartG mbB

(56) References cited:
- EP-A1- 1 685 929
- EP-A2- 3 034 248
- WO-A1-2016/146194
- CN-Y- 2 902 610
- DE-A1-102008 006 469
- DE-A1-102010 029 557
- GB-A- 2 397 704
- JP-A- 2018 033 288
- US-A1- 2008 035 507
- US-A1- 2017 259 956

## Description

### Technical Field

The present disclosure relates generally to toolboxes and charging systems, and more specifically, to a toolbox in which a power tool is allowed to be accommodated and a charging system including the toolbox.

### Background Art

A power tool configured to be driven by electric power supplied from a battery pack has been disclosed (see, for example, Document 1 (JP 2018-111187 A)).

To the power tool described in Document 1, the battery pack is to be detachably attached. The power tool rotates a motor by electric power supplied from batteries included in the battery pack to rotate a tip end tool.

Such a power tool may be transported or stored in a state where the power tool is accommodated in a case of a toolbox. The case is configured to accommodate the battery pack, a charger, and the like together with the power tool.

In the battery pack and the charger while charging is in progress, an improvement of waterproof properties and dust-proof properties is in demand.

WO 2016/146194 A1 relates to a tool case comprising a case bottom and a case lid, wherein the case bottom and/or the case lid has at least one holding receptacle for at least one hand-held tool, wherein the tool case has at least one charging station for charging at least one accumulator of a hand-held tool. According to the invention, in order to optimise the charging state of the accumulators, the charging station is designed to vary the duration of the charging process (charging time) of the accumulator in accordance with a detected frequency of use of the accumulator and/or a movement of the tool case or at least parts of the tool case.
EP 1 685929 A1 discloses a tool box with the features of the preamble of claim 1 and describes an electric device mounting type tool storage case that is easily transported together with other electric devices such as audio devices in addition to an electric tool body and can stand against contamination such as dust in the work site. An audio device as an electric device can be stored in the tool storage case which is used as an enclosure of a pair of speakers. Storage portions disposed in the tool storage case are partitioned by partition walls into a pair of sound channel spaces. In addition, a power switching circuit of an AC-DC converter power supply circuit or a battery DC power supply is formed in the tool storage case, and power wiring lines or inner wiring lines are disposed along the partition walls. While a cover case closes a storage case, electric devices such as an audio device or a charger are operated.
DE 10 2010 029557 A1 relates to a battery charging case, in particular a handheld tool battery charging case. The battery charging case is proposed with at least one battery charging contact unit which is provided to establish detachable contact with at least one battery charger.
EP 3 034248 A1 relates to a container for storing at least one device, driven by an accumulator, with a housing and with a power supply for charging the at least one accumulator, whereby At least one device is a hot glue gun with a heater for heating a hot melt adhesive, in which the technical problem of further improving and / or making a container for storing at least one hot glue gun driven by an accumulator is solved that the hot glue gun has a connection for an external power source and that the connection supplies the heater directly with an external heating current. The invention also relates to a correspondingly designed hot glue gun.
GB 2 397 704A describes a case for one or more battery powered tools includes an integral charger and battery storage points equipped with charging terminals. Additional embodiments describe a charge level indicator and an audible alarm connected to a movement sensor in the case.
US 2008/035507A1 relates to a power tool case for storing battery-operated power tools including a housing, an electrical connector, and an internal electrical outlet. The housing defines at least one compartment for storing a battery charger and has a handle for transporting the case. The electrical connector is carried by the housing and is adapted to electrically couple with an electrical power source to provide power for the case. The internal electrical outlet is also carried by the housing and is electrically coupled with the electrical connector to allow the battery charger to remain plugged into the internal electrical outlet while the battery charger is stored in the compartment.
US 2017/259956A1 describes a stackable case including a cooling and/or heating device, such as a Peltier element, so that the stackable case can be used as a cooler and/or warmer for storing beverages, food, etc. A power source device, in which a plurality of battery packs is housed, supplies power to the Peltier element and one or more fans. The power supply device has latches for detachably joining or linking it to the stackable case in a stacked manner.
JP 2018 033288A describes a charge/discharge unit including a plurality of attachment parts, a charge/discharge circuit part, a housing, a base and a partition plate part. On each of the plurality of attachment parts, a battery pack is attached in a detachable manner. The charge/discharge circuit part has a function of charging and discharging the battery pack attached to an arbitrary attachment part among the plurality of attachment parts. The housing houses the plurality of attachment parts and the charge/discharge circuit part, and also can house the battery pack. The base is housed in the housing and has a plurality of attachment parts. The partition plate part is positioned between the housing and an intermediate part in between mutually neighboring two attachment parts among the plurality of attachment parts in the base.
DE 10 2008 006469 A1 relates to a device such as tool case or transport box. The device has a plastic case partially enclosing a tool, i.e., power tool, and an accessory e.g., battery, of the tool. Periphery of a case wall is associated with a connector for electrically conductive connection with a current source. A multi-conductor cable is provided for current supply of the tool or the accessory. The cable is connected to the connector and arranged in sections inside the case. The case wall has a recess including a base with an opening for the cable.

CN2902610Y shows a toolbox with an inlet socket on the box wall.

### Summary of Invention

In view of the foregoing, it is an object of the present disclosure to provide a toolbox and a charging system which enable an improvement of the waterproof properties and the dust-proof properties of a battery pack and a charger while charging is in progress. The claimed invention is defined by the independent claims. Preferred embodiments are defined in the dependent claims.

A toolbox according to one aspect of the present disclosure includes a case. In the case, the power tool, a battery pack configured to supply electric power to the electric tool, and a charger configured to charge the battery pack with electric power supplied from an external power source are to be accommodated. The case has an electric path penetration part through which an electric path extends from an inner side through an outer side of the case. The toolbox further comprises a magnet socket provided at the electric path penetration part and configured to electrically connect the charger to the external power supply.

A charging system according to one aspect of the present disclosure includes the toolbox and the charger.

### Brief Description of Drawings

FIG. 1 is a plan view illustrating a toolbox not forming part of the present claimed invention, with a cover of a case of the toolbox being open;
FIG. 2 is a plan view illustrating the toolbox, with the cover of the case being closed;
FIG. 3 is a bottom view illustrating the toolbox with the cover of the case being closed;
FIG. 4 is a perspective view illustrating the case (first case) of the toolbox and second cases are stacked on each other;
FIG. 5 is a block diagram illustrating the toolbox and a charging system;
FIG. 6 is a block diagram illustrating the toolbox and a security system;
FIG. 7 is a plan view illustrating a toolbox according to the claimed invention, with a cover of a case of the toolbox being open;
FIG. 8 is a block diagram illustrating a toolbox and a charging system not forming part of the present claimed invention;
FIG. 9 is a plan view illustrating a toolbox of another variation of the one embodiment of the present disclosure with a cover of a case of the toolbox being closed; and
FIG. 10 is a bottom view illustrating a toolbox of the another variation of the one embodiment of the present disclosure with the cover of the case being closed;

### Description of Embodiments

An embodiment and variations described below are mere examples of the present disclosure, and the present disclosure is not limited to the embodiments and the variations.

### (Embodiment)

### (1) Schema

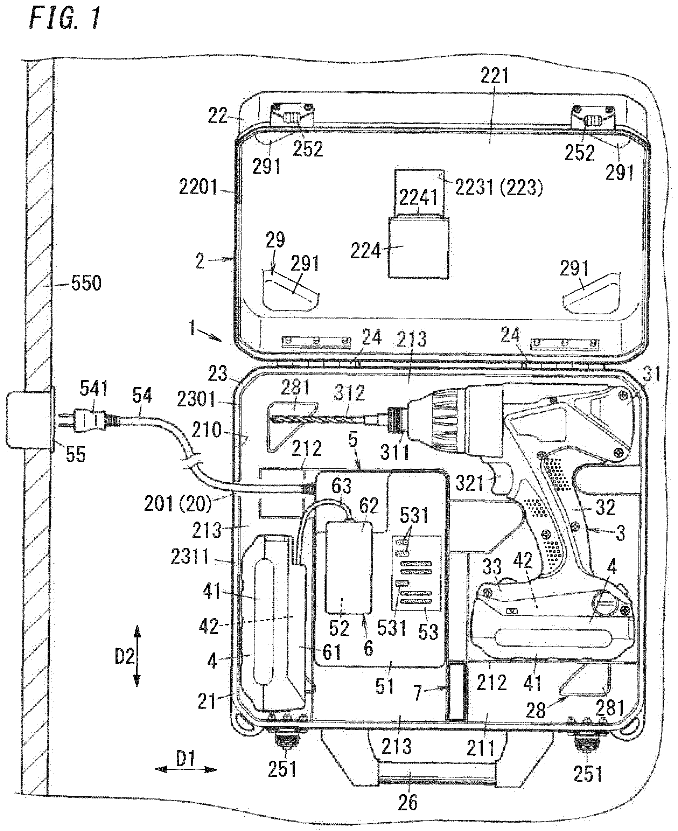

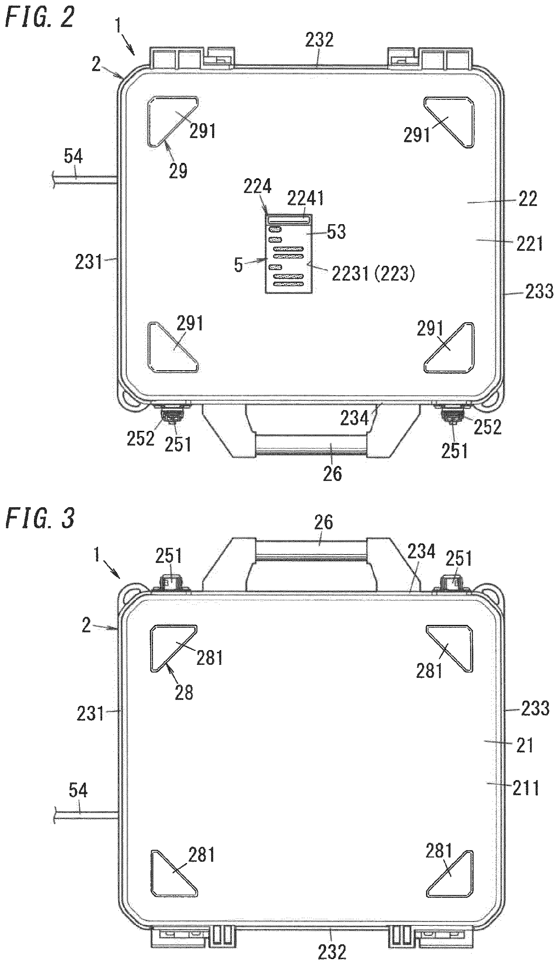

A toolbox 1 according to an embodiment not forming part of the claimed invention will be described with reference to FIGS. 1 to 6.

The toolbox 1 not part of the invention includes a case 2 in which a power tool 3 is to be accommodated. The case 2 is a hollow rectangular parallelepiped as a whole. The case 2 includes a body 21 and a cover 22 and is configured to be openable and closable. The case 2 includes: a bottom plate 211 serving as a lower side (ground side) in an exemplary use and having a rectangular plate shape; a top plate 221 serving as an upper side and having a rectangular plate shape; and a peripheral wall 23 being adjacent to the bottom plate 211 and the top plate 221 and having a rectangular tubular shape.

In the following description, a longitudinal direction of the bottom plate 211 and the top plate 221 is referred to as a first direction D1, a short direction of the bottom plate 211 and the top plate 221 is referred to as a second direction D2, and a direction in which the bottom plate 211 and the top plate 221 face each other is referred to as a third direction D3. The first direction D1, the second direction D2, and the third direction D3 are orthogonal to one another.

The power tool 3 is a portable tool driven by supplied electric power. In the present embodiment, the power tool 3 is a battery-driven tool to which a battery pack 4 is attachable and which is driven by electric power supplied from the battery pack 4. An example of the power tool 3 is an impact driver.

The case 2 accommodates two battery packs 4 and a charger 5 configured to charge the battery packs 4 in addition to the power tool 3. Of the two battery packs 4, one battery pack 4 is accommodated in a state where the one battery pack 4 is attached to the power tool 3, and the other battery pack 4 is accommodated in a state where the other battery pack 4 is not attached to the power tool 3. The power tool 3, the two battery packs 4, and the charger 5 are transported or stored in a state where they are accommodated in the case 2.

The charger 5 is configured to charge the battery pack 4 with electric power supplied from an external power supply 9 (e.g., commercial power supply). The case 2 has an electric path penetration part 20 through which an electric path is allowed to extend from an inner side through an outer side of the case 2. This enables the charger 5 to be electrically connected to the external power supply 9 via the electric path penetration part 20 in a state where the charger 5 is accommodated in the case 2. Thus, in the toolbox 1 of the present embodiment, the battery pack 4 is chargeable in a state where the charger 5 and the battery pack 4 are accommodated in the case 2. In a state where the case 2 is closed, foreign substances (water, grit and dust, and the like) entering the inner side of the case 2 are reduced. Thus, the toolbox 1 enables the waterproof properties and the dust-proof properties of the charger 5 and the battery pack 4 to be improved while the battery pack 4 is charged.

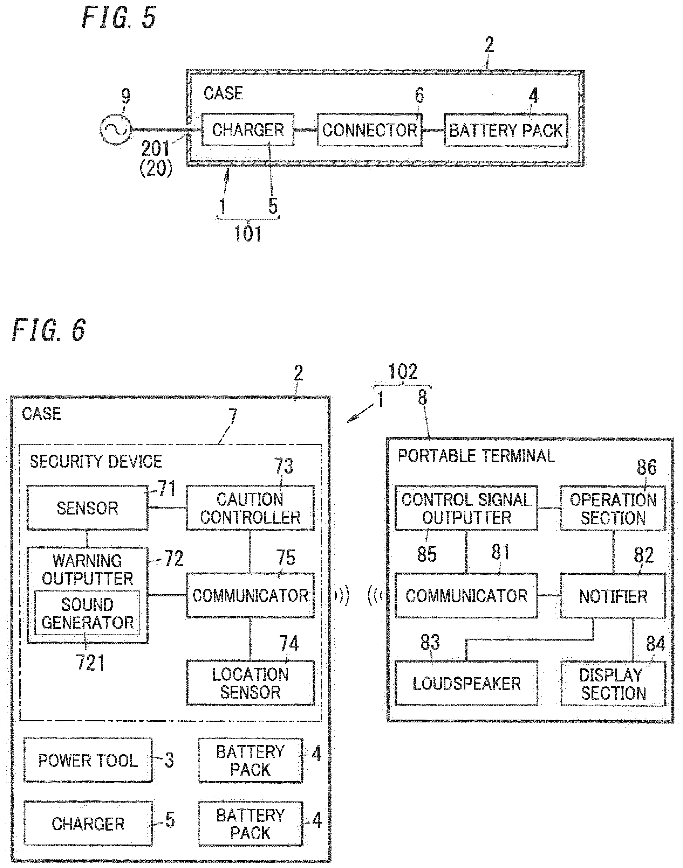

In the present embodiment, the toolbox 1 and the charger 5 form a charging system 101 (see FIG. 5). In other words, the charging system 101 includes the toolbox 1 and the charger 5. The charging system 101 may further include the battery pack 4.

Moreover, the toolbox 1 includes a sensor 71 and a warning outputter 72 (see FIG. 6). The sensor 71 senses a caution target which is at least any one of approaching of a person to the case 2, touching of the case 2 by a person, or movement of the case 2. The warning outputter 72 outputs warning when the sensor 71 senses the caution target. For example, if in a state where the power tool 3 and the like are accommodated in the case 2 and are stored, a third party other than a user attempts to take away the case 2 accommodating the power tool 3, the sensor 71 senses this action as the caution target, and the warning outputter 72 outputs warning (e.g., at least one of a warning sound or a warning signal). The warning signal is output to, for example, a portable terminal 8 (notification terminal) carried by the user. When the portable terminal 8 receives the warning signal, the portable terminal 8 performs notification operation which is, for example, at least one of generation of a warning sound or displaying of a warning message. This enables theft of the power tool 3 and the like accommodated in the case 2 to be deterred.

In the present embodiment, the toolbox 1 and the portable terminal 8 (notification terminal) form a security system 102 (see FIG. 6). In other words, the security system 102 includes the toolbox 1 and the portable terminal 8 (notification terminal). The portable terminal 8 is configured to receive the warning from the warning outputter 72 to perform the notification operation..

### (2) Details

Details of the case 2 and accommodated items (the power tool 3, the battery packs 4, the charger 5, a connector 6, a security device 7) of the case 2 will be described below.

### (2.1) Power tool

As illustrated in FIG. 1, the power tool 3 is, for example, an impact driver. The power tool 3 includes: a body 31 having a tube shape; a grip 32 protruding from a peripheral surface of the body 31 in a radial direction; and a mounting part 33 to which the battery pack 4 is to be freely detachably attached.

The body 31 accommodates a motor and the like. The motor is configured to be powered by electric power supplied from the battery pack 4 attached to the mounting part 33 to perform rotation operation. An output shaft 311 protrudes from one end in an axial direction of the body 31. The output shaft 311 is configured to be rotated by the rotation operation of the motor. To the output shaft 311, a drill bit 312 is attached as a tip end tool. The tip end tool is not limited to the drill bit but may be a driver bit or the like. In the power tool 3, the rotation operation of the motor rotates the output shaft 311, which enables, for example, a boring process.

The power tool 3 further includes an impact mechanism. The impact mechanism is configured to, when tightening torque exceeds a prescribed level, apply striking power to the output shaft 311 in a rotation direction of the output shaft 311. This enables increased tightening torque to be applied to a screw.

The grip 32 is a portion which is to be gripped by a user when the user performs a process, and the grip 32 is provided with a trigger switch 321. The trigger switch 321 is a switch configured to control turning on/off of the rotation operation of the motor. In the power tool 3, the rotation speed of the motor is adjustable in accordance with a pull-in amount of the trigger switch 321 by a worker. The mounting part 33 is provided on an opposite end of the grip 32 from the body 31.

The mounting part 33 is a flat parallelepiped. The battery pack 4 is freely detachably attached to one surface on an opposite side of the mounting part 33 from the grip 32. The mounting part 33 has a surface which faces the grip 32 and which is provided with an operation panel. The operation panel includes, for example, a plurality of push button switches and a plurality of light emitting diodes (LEDs) and enables, for example, various settings of the power tool 3 to be performed and the state of the power tool 3 to be checked. A user can operate, for example, the push button switches of the operation panel, for example, to change the operation mode of the power tool 3 and to check the residual capacity of the battery pack 4.

### (2.2) Battery Pack

As illustrated in FIG. 1, the battery pack 4 includes: a plurality of secondary batteries (e.g., lithium ion batteries); a housing body 41 accommodating the plurality of secondary batteries and being a rectangular parallelepiped; and a connector 42 protruding from part of one surface of the housing body 41. In the housing body 41, the plurality of secondary batteries are connected to each other in series, and the battery pack 4 is configured to output a direct-current voltage of, for example, 14.4 V as a rated voltage. Note that the rated voltage is not limited to 14.4 V but may be, for example, 18 V

The connector 42 is a flat rectangular parallelepiped and includes a plurality of battery terminals electrically connected to the plurality of secondary batteries. The connector 42 is configured to be freely detachably attached to the mounting part 33 of the power tool 3 and a mounting part 52 of the charger 5. That is, the battery pack 4 is attachable to and detachable from the mounting part 33 of the power tool 3 and the mounting part 52 of the charger 5.

When the battery pack 4 is attached to the mounting part 33 of the power tool 3, the plurality of battery terminals of the connector 42 are electrically connected to a plurality of tool terminals of the power tool 3, and electric power is supplied from the plurality of secondary batteries of the battery pack 4 to the power tool 3. That is, when the battery pack 4 is attached to the power tool 3, the battery pack 4 supplies electric power to the power tool 3. When the battery pack 4 is attached to the mounting part 52 of the charger 5, the plurality of battery terminals of the connector 42 are electrically connected to a plurality of charging terminals of the charger 5, and electric power is supplied from the charger 5 to the plurality of secondary batteries of the battery pack 4. That is, the battery pack 4 is charged by being attached to the mounting part 52 of the charger 5.

The configuration of the battery pack 4 is not limited to a configuration in which the battery pack 4 is directly attached to the charger 5 so as to be electrically connected to the charger 5, but the battery pack 4 may be configured to be electrically connected to the charger 5 via the connector 6. The connector 6 is an attachment for electrically connecting the battery pack 4 and the charger 5 to each other. A detailed configuration of the connector 6 will be described in "(2.5) Connector".

### (2.3) Charger

As illustrated in FIG. 1, the charger 5 includes: a housing body 51 accommodating a charging circuit and being a rectangular parallelepiped; a power supply cable 54 led out of the housing body 51; and a plug 541 at a tip end of the power supply cable 54.

The housing body 51 is made of a synthetic resin and accommodates the charging circuit in its interior. The charging circuit includes, for example, a rectifier circuit configured to rectify an alternating current voltage supplied from the external power supply 9 (see FIG. 5) such as a commercial power supply and a step-down circuit configured to step down an output voltage of the rectifier circuit to output a direct-current voltage. The housing body 51 has one surface provided with the mounting part 52. The mounting part 52 is a recess to which the connector 42 of the battery pack 4 or a second connector 62 of the connector 6 is to be freely detachably attached. The mounting part 52 includes a plurality of charging terminals electrically connected to the charging circuit. When the connector 42 of the battery pack 4 is attached to the mounting part 52 of the charger 5, a plurality of battery terminals of the battery pack 4 and the plurality of charging terminals of the charger 5 are electrically connected to each other.

The power supply cable 54 is electrically connected to the charging circuit and is led out of the housing body 51.

The plug 541 is provided at the tip end of the power supply cable 54 and is connectable to, for example, a socket 55 (outlet) provided on a wall 550.

The plug 541 of the charger 5 is connected to the socket 55, thereby electrically connecting the charging circuit and the external power supply 9 to each other. The charger 5 charges the battery pack 4 directly or via the connector 6 with electric power supplied from the external power supply 9.

Moreover, on the one surface of the housing body 51, a state display section 53 is provided. The state display section 53 includes light emitting diodes (LEDs) 531 for displaying the charge state of the battery pack 4. The state display section 53 is configured to change the display mode (e.g., ON, OFF, flashing, and light emission color) of the LEDs 531 in accordance with the charge state (e.g., charging is in progress, charging is complete, and charger error) of the battery pack 4. A user checks the state display section 53 to grasp the charge state of the battery pack 4.

### (2.4) Case

As illustrated in FIGS. 1 to 4, the case 2 is a hollow rectangular parallelepiped as a whole. The case 2 is made of, for example, a synthetic resin. The case 2 includes: a bottom plate 211 serving as a lower side (ground side) in an exemplary use and having a rectangular plate shape; a top plate 221 serving as an upper side and having a rectangular plate shape; and a peripheral wall 23 being adjacent to the bottom plate 211 and the top plate 221 and having a rectangular tubular shape. In a state where the cover 22 of the case 2 is closed, the bottom plate 211 and the top plate 221 face each other in the third direction D3. The peripheral wall 23 includes a first side wall 231 to a fourth side wall 234 each having a rectangular plate shape. The first side wall 231 and the third side wall 233 face each other in the first direction D1, and the second side wall 232 and the fourth side wall 234 face each other in the second direction D2.

The body 21 of the case 2 has one surface formed as an opening and has a rectangular box shape. The body 21 includes the bottom plate 211 and a first peripheral wall 2301 having a rectangular tubular shape. The first peripheral wall 2301 protrudes from a peripheral edge of the bottom plate 211 in a thickness direction (third direction D3) of the bottom plate 211. The cover 22 of the case 2 has one surface formed as an opening and has a rectangular box shape. The cover 22 includes the top plate 221 and a second peripheral wall 2201 having a rectangular tubular shape. The second peripheral wall 2201 protrudes from a peripheral edge of the top plate 221 in a thickness direction (third direction D3) of the top plate 221. The peripheral wall 23 of the case 2 includes the first peripheral wall 2301 of the body 21 and the second peripheral wall 2201 of the cover 22.

In the case 2, the body 21 and the cover 22 are coupled such that the cover 22 is rotatable between a closed position in which the cover 22 closes an opening section 210 of the body 21 and an open position where the cover 22 opens the opening section 210. Specifically, the second side wall 232 of the case 2 is provided with two hinges 24. The body 21 and the cover 22 are coupled to each other with the two hinges 24.

Moreover, the case 2 includes latches 251 and hooks 252 for holding the cover 22 in a closed position with the cover 22 closing the opening section 210 of the body 21. The case 2 includes two latches 251 and two hooks 252. The latches 251 and the hooks 252 are provided on the fourth side wall 234 of the case 2. The latches 251 are freely rotatably attached to the body 21. The hooks 252 are provided on the cover 22. The latches 251 may be hung on the hooks 252, when the cover 22 is in a closed position.

Moreover, the case 2 includes a handle 26 to be held by a hand of a user or the like. The handle 26 is provided on the fourth side wall 234 of the case 2 and has a U-shape open to the case 2.

The body 21 includes a partition wall 212 protruding from the bottom plate 211 in a thickness direction (the third direction D3) of the bottom plate 211. The partition wall 212 forms a plurality of accommodation recesses 213 (accommodation spaces). The plurality of accommodation recesses 213 have respective shapes corresponding to the power tool 3 provided with the battery pack 4, the charger 5, the battery pack 4 for replacement, and a security device 7 which will be described later. Each of the power tool 3 provided with the battery pack 4, the charger 5, the battery pack 4 for back up (replacement), and the security device 7 is accommodated in a corresponding one of the accommodation recesses 213, and thereby, positional displacement thereof in the case 2 is reduced. Moreover, the other accommodation recesses 213 in the case 2 may accommodate, for example, tip end tools (a driver bit, a drill bit, and the like) for replacement. Note that accommodation locations of the power tool 3, the charger 5, the battery pack 4, and the security device 7 in the case 2 are not limited to the locations shown in FIG. 1 but may accordingly be changed depending on the shape of the power tool 3, the number of the battery packs 4, and the like. Moreover, in the example shown in FIG. 1, one power tool 3, one charger 5, and two battery packs 4 are accommodated, but even more power tools 3, chargers 5, and battery packs 4 may be accommodated. Moreover, the shapes of the accommodation spaces in which the power tool 3, the charger 5, the battery packs 4, and the security device 7 are accommodated are not limited to recessed shapes as the shapes of the accommodation recesses 213. The accommodation spaces are shapes at least corresponding to the respective shapes of the power tool 3, the charger 5, the battery pack 4, and the security device 7.

The case 2 has an electric path penetration part 20 through which an electric path is allowed to extend from the inner side through the outer side of the case 2. In the present embodiment, the electric path penetration part 20 is a through hole 201 formed in the case 2. The through hole 201 allows the power supply cable 54 of the charger 5 as an electric path to extend therethrough. Thus, in a state where the charger 5 is accommodated in the case 2, the power supply cable 54 may be led out through the through hole 201 to the outer side of the case 2.

The through hole 201 is formed to penetrate through the first side wall 231 of the case 2 in the first direction D1. Specifically, the through hole 201 is formed to penetrate through a side wall 2311 (part of the body 21) corresponding to the first side wall 231 of the first peripheral wall 2301 of the case 2. The through hole 201 is continuous with the opening section 210 of the body 21. Thus, in a state where the cover 22 is in the open position where the cover 22 opens the opening section 210 of the body 21, the power supply cable 54 is easily inserted into the through hole 201 via a continuous portion between the through hole 201 and the opening section 210. Moreover, the through hole 201 is a slit extending along the thickness direction (the third direction D3) of the bottom plate 211 and has a dimension which allows the power supply cable 54 to pass therethrough but does not allow the plug 541 to pass therethrough. Thus, it is possible to reduce foreign substances, such as grit and dust and water, entering the case 2 through the through hole 201. Moreover, it is possible to suppress a reduction of the strength of the case 2 due to the through hole 201.

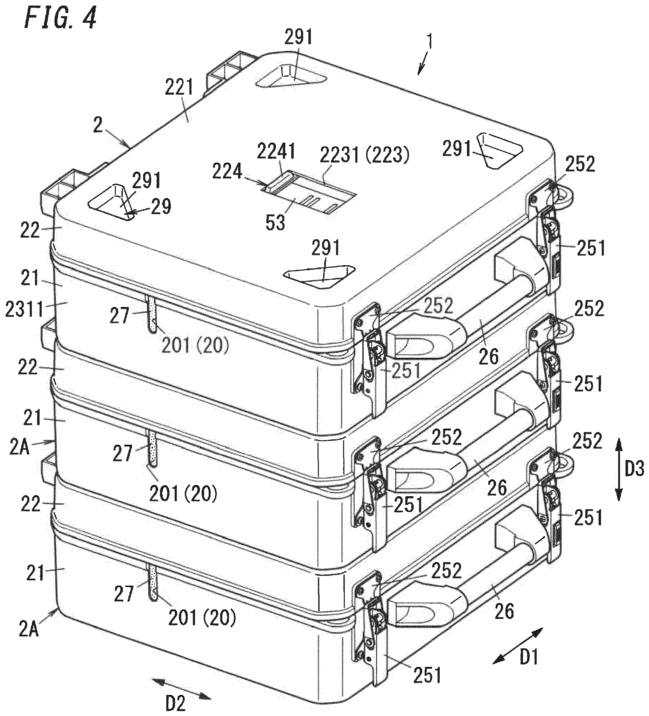

Moreover, the case 2 includes a closing member 27 (see FIG. 4) which closes the through hole 201. The closing member 27 is, for example, is a packing made of rubber and is freely detachably attached to a peripheral portion of the through hole 201 of the body 21. The closing member 27 is detached when the power supply cable 54 of the charger 5 is put in the through hole 201, and the closing member 27 is attached when the power supply cable 54 is not put in the through hole 201. That is, the through hole 201 is closed with the closing member 27 when the power supply cable 54 is not put in the through hole 201. This reduces foreign substances, such as grit and dust and water, entering the case 2 through the through hole 201.

The top plate 221 of the case 2 has a light outgoing part 223. The light outgoing part 223 is configured to allow light indicating the charge state of the battery pack 4 by the charger 5 accommodated in the case 2 to go out of the case 2. In the present embodiment, the light outgoing part 223 is a through hole 2231 which is rectangular and which is formed in the top plate 221. The through hole 2231 is formed at a location facing the state display section 53 of the charger 5 accommodated in the case 2 in the third direction D3. The light outgoing part 223 exposes the state display section 53 of the charger 5 to allow light of the LEDs 531 of the state display section 53 for showing the charge state of the battery pack 4 to directly go out of the case 2. Thus, a user can check the charge state of the battery pack 4 without opening the cover 22.

Moreover, the cover 22 is provided with a shutter 224 which opens/closes the through hole 2231. The shutter 224 is configured to be movable between a closed position where the shutter 224 covers the through hole 2231 and an open location where the shutter 224 opens the through hole 2231. The shutter 224 has a knob 2241. A user can hold the knob 2241 to move the shutter 224. When a user checks the charge state of the battery pack 4, the user moves the shutter 224 to the open location, and otherwise, the shutter 224 is in the closed location, and thereby, it is possible to reduce foreign substances, such as grit and dust and water, entering the case 2 through the through hole 2231.

Note that the light outgoing part 223 may be formed from a light transmissive member (e.g., a transparent acrylic resin) having a light transmitting property instead of the through hole 2231. In this case, the cover 22 may be provided with the shutter 224, or the shutter 224 may be omitted. Moreover, a location where the light outgoing part 223 is provided is not limited to the location facing the state display section 53 of the charger 5. For example, the light outgoing part 223 may include a light guiding member which indirectly radiates light of the LEDs 531 of the state display section 53 showing the charge state of the battery pack 4. The light guiding member guides light generated through light emission of the state display section 53 of the charger 5 to go out through part of the peripheral wall 23 of the case 2.

Moreover, the case 2 (first case 2) includes a first engagement part 28 and a second engagement part 29 and is stackable with a second case 2A in the third direction D3 (see FIG. 4). The second case 2A has a similar shape and dimension to the case 2, and therefore, the detailed description thereof is omitted. In a similar manner to the case 2, the second case 2A accommodates a power tool, battery packs, a charger, and the like as accommodated items. Note that the accommodated items in the second case 2A do not have to be the same as the accommodated items in the case 2. For example, the power tool accommodated in the second case 2A may be of different type from the power tool 3 accommodated in the case 2.

The first engagement part 28 includes four projections 281 formed at four corners of the bottom plate 211 of the case 2. Each projection 281 has an outer shape which is triangular shape when viewed in the thickness direction (the third direction D3) of the bottom plate 211, and each projection 281 protrudes from the bottom plate 211 to the outer side of the case 2. Each projection 281 is a leg section which comes into contact with the ground when the case 2 is placed with the bottom plate 211 facing the ground.

The second engagement part 29 includes four recesses 291 formed at four corners of the top plate 221 of the case 2. Each recess 291 is a recess whose outer shape is triangular when viewed in the thickness direction (the third direction D3) of the top plate 221.

Similarly to the case 2, the second case 2A has a bottom plate 211 which is provided with four projections 281 and a top plate 221 in which four recesses 291 are formed.

When the case 2 and the second case 2A are stacked on each other in the third direction, the first engagement part 28 of the case 2 and the second engagement part 29 of the second case 2A are fitted to each other, or the second engagement part 29 of the case 2 and the first engagement part 28 of the second case 2A are fitted to each other. Specifically, when the bottom plate 211 of the case 2 is stacked on the top plate 221 of the second case 2A, the first engagement part 28 (four projections 281) of the case 2 is fitted to the second engagement part 29 (four recesses 291) of the second case 2A. Alternatively, when the bottom plate 211 of the second case 2A is stacked on the top plate 221 of the case 2, the first engagement part 28 (four projections 281) of the second case 2A is fitted to the second engagement part 29 (four recesses 291) of the case 2. Thus, positional displacement between the case 2 and the second case 2A is reduced in a state where the case 2 and the second case 2A are stacked on each other.

Note that the second case 2A includes the first engagement part 28 and the second engagement part 29, and therefore, stacking second cases 2A on each other in the third direction D3 is also possible.

### (2.5) Connector

As illustrated in FIG. 1, the connector 6 is an attachment for electrically connecting the battery pack 4 and the charger 5 to each other. The connector 6 includes: a first connector 61 connected to the connector 42 of the battery pack 4; a second connector 62 connected to the mounting part 52 of the charger 5; and a connection cable 63 which electrically connects the first connector 61 and the second connector 62 to each other.

The first connector 61 is freely detachably attached to the connector 42 of the battery pack 4. The first connector 61 includes a plurality of first connection terminals. When the first connector 61 is attached to the connector 42 of the battery pack 4, the plurality of first connection terminals are electrically connected to the plurality of battery terminals of the connector 42.

The second connector 62 is freely detachably attached to the mounting part 52 of the charger 5. The second connector 62 includes a plurality of second connection terminals. When the second connector 62 is attached to the mounting part 52 of the charger 5, the plurality of second connection terminals are electrically connected to the plurality of charging terminals of the charger 5.

The connection cable 63 electrically connects the plurality of first connection terminals of the first connector to the plurality of second connection terminals of the second connector.

When the first connector 61 is attached to the battery pack 4 and the second connector 62 is attached to the charger 5, the battery pack 4 and the charger 5 are electrically connected to each other via the connection cable 63.

Moreover, the case 2 is configured to accommodate the battery pack 4, the charger 5, and the connector 6 in a state where the connector 6 is connected to the battery pack 4 and the charger 5. In other words, the case 2 is configured to accommodate the battery pack 4 and the charger 5 electrically connected to each other via the connector 6 in the plurality of accommodation recesses 213 of the body 21 and to allow the cover 22 to be in the closed position.

### (2.6) Security Device

The security device 7 is a device configured to protect accommodated items (the power tool 3, the battery pack 4, and the charger 5) in the case 2 from, for example, theft. In the present embodiment, the security device 7 has a tag shape and is operated by a battery (e.g., a primary battery or a secondary battery). The security device 7 is accommodated in the accommodation recess 213 of the body 21 of the case 2. That is, the security device 7 is configured to be attachable to and detachable from the case 2.

As illustrated in FIG. 6, the security device 7 includes a sensor 71, a warning outputter 72, a caution controller 73, and a location sensor 74.

The sensor 71 is configured to sense movement, as the caution target, of the case 2. The sensor 71 includes an acceleration sensor, a gyroscope sensor, and the like as sensors and determines, based on a sensing result of the sensors, whether or not the movement of the case 2 is caused. For example, the security device 7 (sensor 71) is accommodated in the case 2, and when the movement of the case 2 is caused, an acceleration along with the movement occurs. When the magnitude of the acceleration exceeds a prescribed value, the sensor 71 determines that the movement of the case 2 is caused. Note that the movement of the case 2 includes not only displacement of the case 2 but also vibration of the case 2. For example, the sensor 71 senses an acceleration along with vibration caused when a person touches the case 2, and the sensor 71 determines that the movement of the case 2 is caused.

The warning outputter 72 is configured to output warning when the sensor 71 senses the caution target (movement of the case 2). The warning outputter 72 outputs a warning sound as the warning. The warning outputter 72 includes a sound generator 721 configured to generate the warning sound. The sound generator 721 includes, for example, a loudspeaker or a buzzer. When the sensor 71 senses the caution target, the warning outputter 72 outputs the warning sound from the sound generator 721. This informs people around the case 2 that the sensor 71 senses the caution target.

Moreover, the warning outputter 72 outputs a warning signal as the warning. The warning outputter 72 outputs the warning signal to the portable terminal 8 via a communicator 75. The portable terminal 8 as a notification terminal is a terminal such as a smartphone or a tablet terminal. A user or a manager of the toolbox 1 carries the portable terminal 8. The portable terminal 8 includes a communicator 81 configured to communicate with the communicator 75 of the security device 7. The portable terminal 8 includes a notifier 82 configured to perform notification operation when the communicator 81 receives the warning signal, and the portable terminal 8 thus has a function as a notification terminal. The notifier 82 performs, as the notification operation, at least one of generation of a warning sound from a loudspeaker 83 or displaying of a warning message on a display section 84.

The communicator 75 is a communication module compatible with a wireless communication standard such as Bluetooth (registered trademark), Wi-Fi (registered trademark), mobile communication, or the like, and the communicator 75 is configured to perform wireless communication with the communicator 81 of the portable terminal 8.

Moreover, when the warning outputter 72 receives a stop signal from the portable terminal 8, the warning outputter 72 stops the warning. Thus, a user can stop the generation of the warning sound.

The caution controller 73 is configured to turn on/off sensing operation of sensing the caution target by the sensor 71. The caution controller 73 turns on/off, based on a control signal which the caution controller 73 receives from the portable terminal 8 via the communicator 75, the sensing operation performed by the sensor 71. The portable terminal 8 includes a control signal outputter 85 configured to output, to the security device 7, the control signal for turning on/off the sensing operation performed by the sensor 71, and the portable terminal 8 thus has a function as a control terminal. That is, the portable terminal 8 has functions both as the notification terminal and as the control terminal. The portable terminal 8 includes an operation section 86 configured to receive an operation given by a user. The control signal outputter 85 outputs the control signal to the security device 7 in accordance with the operation received by the operation section 86. The caution controller 73 turns on/off, based on the control signal which the caution controller 73 receives via the communicator 75, the sensing operation performed by the sensor 71. That is, when a user gives an operation to the operation section 86 of the portable terminal 8 so as to turn on the sensing operation performed by the sensor 71, the control signal representing contents of the operation is output to the security device 7, and the security device 7 enters a caution state where the sensor 71 performs the sensing operation of sensing the caution target. Alternatively, when a user gives an operation to the operation section 86 of the portable terminal 8 so as to turn off the sensing operation performed by the sensor 71, the control signal representing contents of the operation is output to the security device 7, and the security device 7 enters a non-caution state where the sensor 71 does not perform the sensing operation of sensing the caution target. For example, for transportation of the toolbox 1, or for work by using the power tool 3, a user causes the security device 7 to enter the non-caution state. Thus, also when a user intentionally moves the case 2, the warning is no longer output.

The location sensor 74 is, for example, a positioning module based on a global positioning system (GPS) and is configured to sense the location of the case 2 based on a signal from a satellite. The location sensor 74 outputs information of the location thus sensed (location information) to the portable terminal 8 via the communicator 75. The portable terminal 8 receives the location information and displays the location information on the display section 84. A display example on the display section 84 is displaying of the location of the case 2 on a map.

When the sensor 71 senses the caution target, the location sensor 74 outputs the location information to the portable terminal 8 via the communicator 75. Thus, a user can grasp the location of the case 2 when the sensor 71 senses the caution target. Moreover, when the location sensed changes over time, that is, the location of the case 2 changes, the location sensor 74 regularly outputs location information to the portable terminal 8. Thus, for example, if the toolbox 1 is stolen, a user can track the location of the toolbox 1 (case 2) based on the location information from the location sensor 74. Moreover, when the location sensor 74 receives a request signal from the portable terminal 8, the location sensor 74 outputs the location information to the portable terminal 8. Thus, a user can grasp the location of the case 2 at an arbitrary timing.

### (3) Operation Example

### (3.1) First Operation Example

As a first operation example, an example will be described in which in a state where the charger 5 and the battery packs 4 are accommodated in the case 2, the battery pack 4 is charged.

Here, description is given of a case where the power tool 3, the two battery packs 4, and the charger 5 are accommodated in the case 2, and one of the battery packs 4 which is not attached to the power tool 3 is charged.

First of all, a user electrically connects the battery pack 4 and the charger 5 accommodated in the case 2 to each other via the connector 6 with the cover 22 of the case 2 being open. Specifically, the first connector 61 of the connector 6 is attached to the connector 42 of the battery pack 4, and the second connector 62 of the connector 6 is attached to the mounting part 52 of the charger 5. Thus, the battery pack 4 and the charger 5 are electrically connected via the connector 6.

Then, the user leads out the power supply cable 54 of the charger 5 via the through hole 201 formed in the case 2 to connect the plug 541 to the socket 55. Since the through hole 201 is continuous with the opening section 210 of the body 21, the power supply cable 54 is easily put in the through hole 201 via the continuous portion where the through hole 201 and the opening section 210 are continuous in a state where the cover 22 is open. Connecting the plug 541 to the socket 55 electrically connects the charger 5 to the external power supply 9(commercial power supply). The charger 5 charges, via the connector 6, the battery pack 4 with electric power supplied from the external power supply 9.

Then, the user closes the cover 22 of the case 2. Thus, in a state where the charger 5 and the battery pack 4 are accommodated in the case 2, the battery pack 4 is charged. Thus, it is possible to reduce foreign substances, such as grit and dust and water, attaching to the charger 5 and the battery pack 4 while charging is in progress. Thus, for example, in a site of work where there are much grit and dust, the battery pack 4 can be charged while reducing attachment of the grit and dust. That is, in the toolbox 1 of the present embodiment, it is possible to improve the dust-proof property and the waterproof property of the battery pack 4 and charger 5 while charging is in progress. Moreover, during storage of the power tool 3, the charger 5, the battery packs 4, and the like accommodated in the case 2, the battery pack 4 can be charged. Thus, it is possible to reduce cases where the battery pack 4 is out of charge at a start of next work, and it is possible to improve convenience. Thus, in the toolbox 1 of the present embodiment, it is possible to achieve both an improvement of the reliability of the charger 5 and the battery pack 4 and an improvement of convenience for charging the battery pack 4.

Moreover, a user opens the shutter 224 provided to the cover 22 when the user checks the charge state of the battery pack 4. Thus, the through hole 2231 in the cover 22 exposes the state display section 53 of the charger 5, and therefore, the user can check the charge state of the battery pack 4. That is, a user accommodates the charger 5 and the battery pack 4 in the case 2 and can check the charge state of the battery pack 4 without opening the cover 22. Thus, it is possible to improve convenience.

Moreover, the battery pack 4 is chargeable in a state where the battery pack 4 and the charger 5 are accommodated in the case 2. Thus, theft of the battery pack 4 and the charger 5 is further deterred as compared to a case where the battery pack 4 is charged in a state where the battery pack 4 and the charger 5 are put out of the case 2. That is, it is possible to improve security of the battery pack 4 and the charger 5.

### (3.2) Second Operation Example

As a second operation example, security operation of the toolbox 1 will be described.

Here, it is assumed that accommodated items such as the power tool 3 are accommodated in the case 2, and the case 2 is stored on a floor.

A user accommodates the security device 7 together with the power tool 3, the battery packs 4, and the charger 5 in the case 2. Then, the user gives, to the operation section 86 of the portable terminal 8, an operation for turning on the sensing operation performed by the sensor 71 and outputs a control signal from the portable terminal 8 to the security device 7.

The caution controller 73 receives the control signal via the communicator 75. The caution controller 73 turns on, based on the control signal which the caution controller 73 receives, the sensing operation performed by the sensor 71. This causes the security device 7 to enter a caution state where the sensor 71 performs the sensing operation of sensing the caution target.

Here, it is assumed that a third party other than a user attempts to steal the toolbox 1 in which the power tool 3 is disposed.

It is assumed that the third party lifts the case 2 to steal the toolbox 1 in which the power tool 3 is disposed. Lifting of the case 2 by the third party causes acceleration in the gravity direction of the security device 7 accommodated in the case 2. The sensor 71 determines, based on a change of the acceleration in the gravity direction, that movement of the case 2 is caused. That is, the sensor 71 senses the caution target.

When the sensor 71 senses the caution target (movement of the case 2), the warning outputter 72 outputs a warning sound as warning from the sound generator 721. The warning sound can inform people around the case 2 of a possibility of theft of the toolbox 1 in which the power tool 3 and the like are accommodated, thereby deterring the theft of the toolbox 1.

Moreover, the warning outputter 72 outputs a warning signal as warning to the portable terminal 8 via the communicator 75. When the portable terminal 8 receives the warning signal, the portable terminal 8 performs, as notification operation, generation of a warning sound from the loudspeaker 83 and displaying of a warning message on the display section 84. Based on the notification operation by the portable terminal 8, a user can grasp the occurrence of an unfavorable change to the toolbox 1. Thus, for example, a user who is aware of the unfavorable change to the toolbox 1 rushes to the storage place of the toolbox 1, thereby deterring theft.

Moreover, when the sensor 71 senses the caution target (movement of the case 2), the location sensor 74 outputs location information to the portable terminal 8 via the communicator 75. Thus, a user can grasp the current location of the toolbox 1. Moreover, when the toolbox 1 is stolen by a third party, the location sensor 74 regularly outputs the location information to the portable terminal 8. Thus, a user can track the current location of the toolbox 1.

Moreover, in the toolbox 1 of the present embodiment, the battery pack 4 is chargeable in a state where the battery pack 4 and the charger 5 are accommodated in the case 2. Thus, it is possible to deter theft of the battery pack 4 and the charger 5 while charging is in progress.

That is, since the toolbox 1 of the present embodiment has the security function, it is possible to deter theft collectively of accommodation items such as the power tool 3, the battery packs 4, and the charger 5. Thus, it is not necessary to individually provide security functions to accommodated items such as the power tool 3. Moreover, the toolbox 1 of the present embodiment enables security of the accommodation items to be improved without installing a security facility such as a monitoring camera at a storage place and without fixing (locking) the case 2 to a structure (e.g., pole) by a chain or the like. Thus, according to the toolbox 1 of the present embodiment, additional installation of the security facility at the storage place is no longer necessary, restrictions on the storage place is thus reduced, and therefore, saving security costs and improving convenience are possible.

Moreover, in the toolbox 1 of the present embodiment, the case 2 (first case 2) is configured to be stacked on the second case 2A (see FIG. 4) and is configured to deter, for example, theft of the second case 2A.

Specifically, when the toolbox 1 of the present embodiment and the second case 2A in which a power tool 3 and the like are accommodated are stored in the same place, the case 2 and the second case 2A are stacked on each other and stored. At this time, as illustrated in FIG. 4, the case 2 of the toolbox 1 of the present embodiment is stacked at an uppermost level on the second case 2A. In the example shown in FIG. 4, the case 2 of the present embodiment is stacked on a stack of two second cases 2A.

When a third party lifts the case 2 at the uppermost level, as described above, the sensor 71 senses movement of the case 2, and the warning outputter 72 outputs warning.

Moreover, the case 2 and the second case 2A include the first engagement parts 28 and the second engagement parts 29, and the four projections 281 provided to the bottom plate 211 of the case 2 are fitted to the recesses formed in the top plate 221 of the second case 2A. Thus, when a third party attempts to steal the second case 2A at, for example, a middle level, the third party has to lift the case 2 at the upper level to release the fit between the case 2 at the upper level and the second case 2A at the middle level. At this time, when the case 2 at the upper level is left, the sensor 71 senses movement of the case 2, and the warning outputter 72 outputs warning. Alternatively, when a third party attempts to steal, for example, a second case 2A at a lower level, the case 2 at the upper level is lifted together with the second case 2A at the middle level, and therefore, the sensor 71 senses the movement of the case 2, and the warning outputter 72 outputs warning. Thus, the case 2 of the toolbox 1 of the present embodiment is stacked on the second case 2A such that the case 2 is at the uppermost level, and thereby, it is possible to deter theft of the second case 2A in which the security device 7 is not accommodated.

Moreover, in the present embodiment, the security device 7 is configured to be freely attachable to and freely detachable from the case 2. Thus, when the second case 2A is stacked at the upper level, the security device 7 is accommodated in the second case 2A at the upper level, and thereby, it is possible to deter theft of a case 2 (second case 2A) below the second case 2A.

### (4) Variation

Variations of the toolbox 1 of the embodiment will be described below.

### (4.1) First Variation

In the above-described example, the electric path penetration part 20 is configured as the through hole 201 continuous with the opening section 210 of the body 21 but is not limited to this configuration. A through hole 201 may be configured not to be continuous with an opening section 210 of a body 21. In this case, the through hole 201 has to have a shape which allows a plug 541 of a charger 5 to pass therethrough.

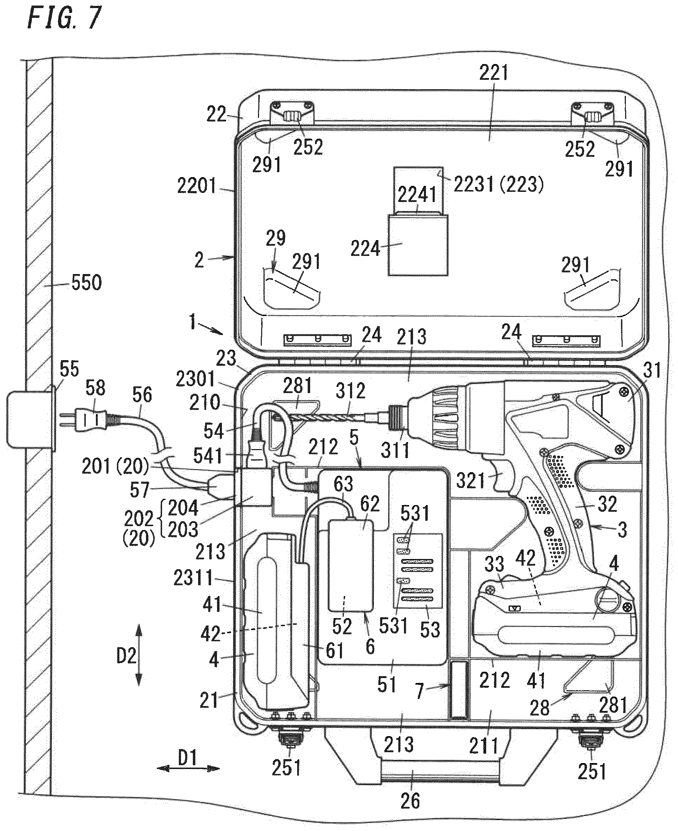

Moreover, as illustrated in FIG. 7, a case 2further includes a connector 202 provided at an electric path penetration part 20 and being electrically connectable to the charger 5 and an external power supply 9 (see FIG. 5). The connector 202 is a magnet socket. The connector 202 may be provided on a side wall 2311 of the body 21 of the case 2. Note that the connector 202 may be formed integrally with the case 2.

In the example of Fig. 7, the connector 202 includes: an inner side connector 203 provided in an interior of the case 2; and an outer side connector 204 disposed to be exposed to an outer side of the case 2. The connector 202 includes, as an electric path through which extends through the electric path penetration part 20, a conductive part which electrically connects an electrode of the inner side connector 203 and an electrode of the outer side connector 204 to each other. The inner side connector 203 is electrically connected to the plug 541 provided at a tip end of a power supply cable 54 of the charger 5. To the outer side connector 204, a magnet plug 57 provided at one end of a power supply cable 56 is electrically connected. The magnet plug 57 includes a magnet. The magnet couples to a magnetic body provided to the outer side connector 204 by magnetic force, thereby maintaining a state where the magnet plug 57 is electrically connected to the outer side connector 204. The other end of the power supply cable 56 is provided with a plug 58. The plug 58 is connected to a socket 55 (outlet) provided on, for example, a wall 550.

To electrically connect the charger 5 to the external power supply 9 in a state where the charger 5 is accommodated in the case 2, the plug 541 provided at the tip end of the power supply cable 54 of the charger 5 is connected to the inner side connector 203 of the connector 202 provided to the body 21 of the case 2. Moreover, the magnet plug 57 of the power supply cable 56 is connected to the outer side connector 204, and the plug 58 is connected to the socket 55 provided on the wall. Thus, the charger 5 is electrically connected to the external power supply 9 via the connector 202 and can charge the battery pack 4.

In the present variation, the case 2 does not have to have a through hole for allowing the power supply cable 54 to pass therethrough. Thus, it is possible to reduce foreign substances, such as grit and dust and water, entering the case 2 through the electric path penetration part 20.

Moreover, in the present variation, the connector 202 includes a magnet socket, and therefore, for example, when a foot of person is caught by the power supply cable 56, the magnet plug 57 is detached from the outer side connector 204. Thus, damages and the like to the power supply cable 56 can be reduced.

Note that in the present variation, the connector 202 includes the magnet socket, and the magnet plug 57 of the power supply cable 56 is configured to be freely attachable and freely detachable to the connector 202, but this configuration is not to be construed as limiting the disclosure. The connector 202 may be fixed to the power supply cable 56. In other words, the connector 202 may be configured such that the power supply cable 56 having a tip end provided with the plug 58 is led out from a housing having the inner side connector 203.

### (4.2) Second Variation

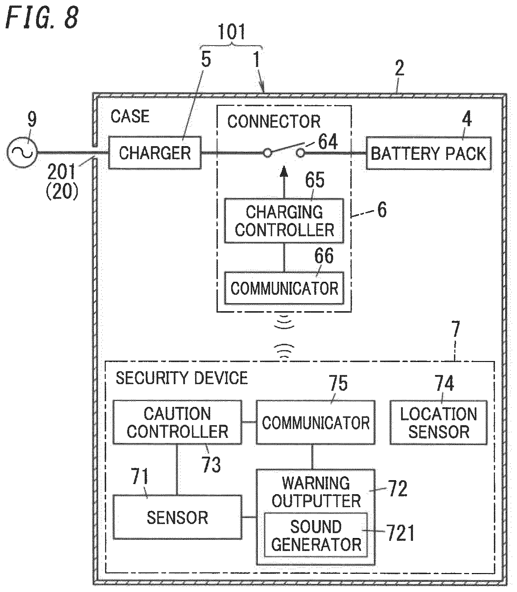

As illustrated in FIG. 8, a toolbox 1 may include a charging controller 65 configured to stop charging operation performed by a charger 5 when a sensor 71 senses movement of a case 2.

In the present variation, a connector 6 further includes a switch 64, the charging controller 65, and a communicator 66. The switch 64, the charging controller 65, and the communicator 66 are provided in, for example, a housing of a first connector 61 or a second connector 62 and are operated by electric power supplied from a charging circuit.

The switch 64 is configured to make and break electrical connection between the first connector 61 connected to a battery pack 4 and the second connector 62 connected to the charger 5.

The charging controller 65 is configured to control turning on/off of the switch 64.

The communicator 66 is, for example, a communication module compatible with a wireless communication standard such as Bluetooth (registered trademark) and is configured to perform communication with a communicator 75 of a security device 7. When the sensor 71 senses movement of the case 2, the communicator 66 receives a warning signal output from a warning outputter 72.

The charging controller 65 keeps the switch 64 in an on state during a normal mode. The charging controller 65 turns off the switch 64 when the communicator 66 receives the warning signal, that is, the sensor 71 senses the movement of the case 2. Thus, the electrical connection between the charger 5 and a battery pack 4 is broken, so that charging operation by the charger 5 is stopped.

In the present variation, the charging operation is stopped, for example, when the case 2 is moved or a cover 22 is opened by a person while charging of the battery pack 4 is in progress in a state where the charger 5 and the battery pack 4 are accommodated in the case 2. Thus, it is possible to improve security.

Note that in the present variation, the charging controller 65 stops the charging operation performed by the charger 5 in accordance with a sensing result by the sensor 71 of the security device 7, but the configuration of the charging controller 65 is not limited to this example. The charging controller 65 may be configured to stop the charging operation performed by the charger 5 when a sensor 71 provided independently of the sensor 71 of the security device 7 senses movement of the case 2. Alternatively, the sensor 71 may be configured to sense opening and closing of the case 2 as the movement of the case 2. For example, the sensor 71 includes a push button switch provided to the second connector 62 to be connected to the charger 5. The push button switch is OFF when the cover 22 is in an open position. When the cover 22 is in a closed position, the push button switch is pushed by the cover 22 and is turned on. The sensor 71 senses the opening and closing of the cover 22 based on turning on/off of the push button switch. When the cover 22 is open, the charging controller 65 turns off the switch 64 to stop the charging operation performed by the charger 5.

### (4.3) Third Variation

In the above-described example, the connector 6 for electrically connecting the charger 5 and the battery pack 4 to each other is configured independently of the case 2, but a connector 6 configured integrally with a case 2 is also possible. In this case, for example, a first connector 61 connected to a battery pack 4 and a second connector 62 connected to a charger 5 are provided to protrude from bottom surfaces of respective accommodation recesses 213 corresponding to the battery pack 4 and the charger 5. A first connection terminal of the first connector 61, a second connection terminal of the second connector 62, and a conductive member electrically connecting the first connection terminal and the second connection terminal to each other are insert molded on a bottom plate 211 of the case 2.

In the present variation, when the battery pack 4 is charged in the case 2, the battery pack 4 is accommodated in the case 2 such that the battery pack 4 is connected to the first connector 61, and the charger 5 is accommodated in the case 2 such that the charger 5 is connected to the second connector 62. Thus, the charger 5 and the battery pack 4 are electrically connected to each other, and the charger 5 can charge the battery pack 4.

### (4.4) Fourth Variation

A caution controller 73 may be configured to: turn off sensing operation performed by a sensor 71 when a portable terminal 8 is present within a predetermined range; and turn on the sensing operation performed by the sensor 71 when the portable terminal 8 is not present within the predetermined range.

Specifically, the caution controller 73 turns off the sensing operation performed by the sensor 71 when the portable terminal 8 is present within the communication range of Bluetooth(registered trademark), and when the portable terminal 8 is not present within the communication range, the caution controller 73 turns on the sensing operation performed by the sensor 71. The caution controller 73 causes a communicator 75 to transmit a confirmation signal based on the communication standard of Bluetooth (registered trademark) in accordance with a prescribed cycle. When the caution controller 73 receives a response signal in response to the confirmation signal from the portable terminal 8, the caution controller 73 determines that the portable terminal 8 is present within the communication range of Bluetooth (registered trademark). When the caution controller 73 fails to receive the response signal in response to the confirmation signal from the portable terminal 8, the caution controller 73 determines that the portable terminal 8 is not present within the communication range of Bluetooth (registered trademark).

Thus, for example, when a user carrying the portable terminal 8 transports a toolbox 1, or when a power tool 3 is used for work around the toolbox 1, a non-caution state is achieved where the sensor 71 forgoes the sensing operation of sensing the caution target. In this case, even if a user or a person around the user intentionally moves a case 2, warning is no longer output.

Moreover, when a user goes away from the toolbox 1, a caution state is achieved where the sensor 71 performs the sensing operation of sensing the caution target. Thus, an operation given by using the portable terminal 8 by a user to cause the sensor 71 to enter the caution state is no longer necessary, which reduces cases where the user forgets to cause the sensor 71 to enter the caution state.

Note that in the present variation, the caution controller 73 is configured to turn on/off the sensing operation performed by the sensor 71 based on communication with the portable terminal 8 carried by a user, but the configuration of the caution controller 73 is not limited to this example. The caution controller 73 may be configured to communicate with a wearable device such as a smartwatch worn by a user to turn on/off of the sensing operation performed by the sensor 71.

Moreover, the security device 7 may include a biometric identifier configured to identify biological information such as fingerprints or voice prints. The biometric identifier acquires, as the biological information, fingerprint information from a fingerprint detector provided to the case 2. Alternatively, the biometric identifier acquires, as the biological information, voice print information from a microphone provided to the case 2 or the security device 7. Based on the biological information acquired, the biometric identifier checks an inputter of the biological information with a person (user) registered in advance. If the biometric identifier determines that the inputter of the biological information is the person registered in advance, the caution controller 73 turns off the sensing operation performed by the sensor 71. If the biometric identifier determines that the inputter of the biological information is different from the person registered in advance, the caution controller 73 turns on the sensing operation performed by the sensor 71.

### (4.5) Fifth Variation

In the above-described example, the security device 7 is configured independently of the case 2, but a security device 7 configured integrally with a case 2 is also possible. In other words, the security device 7 may be fixed to the case 2.

Moreover, a sensor 71 may be configured to sense release of the stacked state of the case 2 and a second case 2A to sense the caution target (movement of the case 2). For example, the sensor 71 includes a lead switch provided on a bottom plate 211 of the case 2. Moreover, the second case 2A has a top plate 221 provided with a magnet at a location overlapping the lead switch when placed on the case 2. The lead switch is turned on when the case 2 is stacked on the second case 2A(on the top plate 221), and the lead switch is turned off when the stacked state of the case 2 and the second case 2A is released. The sensor 71 determines, based on ON/OFF of the lead switch, whether or not the case 2 and the second case 2A are in the stacked state. When the lead switch transitions from an ON state to an OFF state, the sensor 71 determines that the stacked state of the case 2 and the second case 2A is released, that is, the case 2 is moved.

Moreover, the sensor 71 is configured to sense the movement, as the caution target, of the case 2. However, the configuration of the sensor 71 is not limited to this example. The sensor 71 is at least configured to sense a caution target which is at least any one of approaching of a person to the case 2, touching of the case 2 by a person, or movement of the case 2.

For example, the sensor 71 may be an electrostatic or pressure-sensitive contact sensor provided to the case 2 and may be configured to sense touching of the case 2 by a person. Moreover, the sensor 71 may include an optical sensor provided to the case 2 and may be configured to sense approaching of a person to the case 2.

Moreover, in the above-described example, the warning outputter 72 is configured to, when the sensor 71 senses the caution target, output a warning sound and a warning signal as warning, but the configuration of the warning outputter 72 is not limited to this example. For example, a warning outputter 72 may be configured to, when the sensor 71 senses the caution target, to turn on or flash a light source provided to the case 2 as warning.

### (4.6) Other Variation

In the above-described example, the case 2 includes the four projections 281 as the first engagement part 28 and the four recesses 291 as the second engagement part 29, but the configuration of the case 2 is not limited to this example,

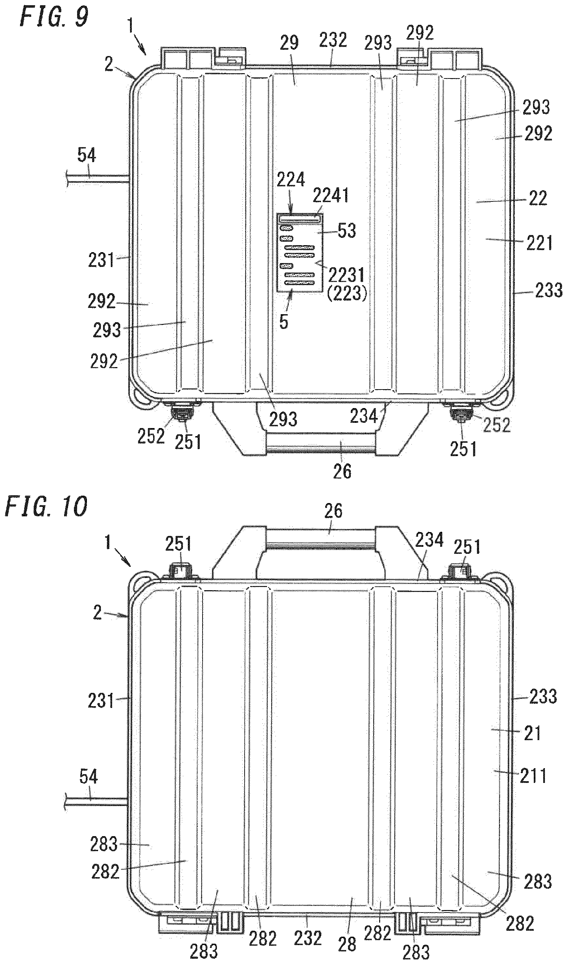

As illustrated in FIGS. 9 and 10, a case 2 may include a plurality first recesses 282 and a plurality of first projections 283 as the first engagement part 28, and a second engagement part 29 may include a plurality of second recesses 292 and a plurality of second projections 293.

Each first recess 282 has an outer shape which is rectangular when viewed in the thickness direction (third direction D3) of the bottom plate 211. Each first recess 282 is a groove formed along the short direction (second direction D2) of a bottom plate 211. Each first projection 283 has an outer shape which is rectangular when viewed in the thickness direction (third direction D3) of the bottom plate 211. Each first recess 282 is formed along the short direction (second direction D2) of the bottom plate 211. The first projections 283 protrude to an outer side of the case 2 beyond bottom surfaces of the first recesses 282. The plurality of first recesses 282 and the plurality of first projections 283 are formed one by one alternately along the longitudinal direction (first direction D1) of the bottom plate 211. In the present variation, the first projections 283 are formed on both edges in the longitudinal direction (first direction D1) of the bottom plate 211.

Each second recess 292 has an outer shape which is rectangular when viewed in the thickness direction (third direction D3) of a top plate 221. Each second recess 292 is a groove formed along the short direction (second direction D2) of the top plate 221. Each second projection 293 has an outer shape which is rectangular when viewed in the thickness direction (third direction D3) of the top plate 221. Each second projection 293 is formed along the short direction (second direction D2) of the top plate 221. The second projections 293 protrude to the outer side of the case 2 beyond bottom surfaces of the second recesses 292. The plurality of second recesses 292 and the plurality of second projections 293 are formed one by one alternately along the longitudinal direction (first direction D1) of the top plate 221. In the present embodiment, the second recesses 292 are formed on both edges in the longitudinal direction (first direction D1) of the top plate 221.

In a similar manner to the case 2, a second case 2A includes a bottom plate 211 provided with a plurality of first recesses 282 and a plurality of first projections 283 and a top plate 221 provided with a plurality of second recesses 292 and a plurality of second projections 293.

When the case 2 and the second case 2A are stacked on each other in the third direction, the first engagement part 28 of the case 2 and the second engagement part 29 of the second case 2A are fitted to each other, or the second engagement part 29 of the case 2 and the first engagement part 28 of the second case 2A are fitted to each other. Specifically, when the bottom plate 211 of the case 2 is stacked on the top plate 221 of the second case 2A, the plurality of first recesses 282 and the plurality of first projections 283 of the first engagement part 28 of the case 2 are fitted to the plurality of second projections 293 and the plurality of second recesses 292 of the second engagement part 29 of the second case 2A. Alternatively, when the bottom plate 211 of the second case 2A is stacked on the top plate 221 of the case 2, the plurality of first projections 283 and the plurality of first recesses 282 of the first engagement part 28 of the second case 2A are fitted to the plurality of second recesses 292 and the plurality of second projections 293 of the second engagement part 29 of the case 2. Thus, positional displacement between the case 2 and the second case 2A is reduced in a state where the case 2 and the second case 2A are stacked on each other.

Moreover, in the above-described example, the portable terminal 8 has functions as the control terminal and the notification terminal, but the configuration of the portable terminal 8 is not limited to this example. The control terminal and the notification terminal may be respective dedicated terminals different from universal terminals such as the portable terminal 8.

Moreover, in the above-described example, in the case 2, the charger 5 is electrically connected to the battery pack 4 via the connector 6, but this is not to be construed as limiting the disclosure. The charger 5 may directly be connected to the battery pack 4.

Moreover, when the power tool 3 is a battery built-in tool in which a battery is built, the charger 5 may be configured to charge the battery built in the power tool 3 in the case 2.

Moreover, in the above-described example, the power tool 3 accommodated in the case 2 is an impact driver, but the power tool 3 may be any other type of tool. For example, the power tool 3 may be an impact wrench, a hammer drill, a jigsaw, a cable cutter, or a screw cutter.

Moreover, the power tool 3 is not limited to a battery-driven tool driven by electric power supplied from the battery pack 4. The power tool 3 may be an AC-driven tool driven by an alternating-current power supplied from the external power supply 9 (commercial power supply).

### (Summary)

A toolbox (1) of a first aspect includes a case (2). In the case (2), a power tool (3), a battery pack (4) which supplies electric power to the power tool (3), and a charger (5) configured to charge the battery pack (4) with electric power supplied from an external power supply (9) are to be accommodated. The case (2) has an electric path penetration part (20) through which an electric path extends from an inner side through an outer side of the case (2).

This configuration enables the charger (5) to be connected to the external power supply (9) via the electric path penetration part (20), and therefore, it is possible to charge the battery pack (4) in a state where the charger (5) and the battery pack (4) are accommodated in the case (2). Thus, it is possible to improve the waterproof properties and dust-proof properties of the battery pack (4) and the charger (5) while charging is in progress.

A toolbox (1) of a second aspect referring to the first aspect further includes a connector (6) configured to electrically connect the battery pack (4) and the charger (5) accommodated in the case (2) to each other.

According to this configuration, the battery pack (4) does not have to be directly connected to the charger (5), and thus, this configuration enables an increase of the size of the case (2) to be reduced.

In a toolbox (1) of a third aspect referring to the first or second aspect, the electric path penetration part (20) is a through hole (201) formed in the case (2).

This aspect enables a power supply cable (54) of the charger (5) to extend through the through hole (201), and thus, this simple structure enables the external power supply (9) to be electrically connected to the charger (5).

In a toolbox (1) of a fourth aspect referring to the third aspect, the case (2) includes: a body (21) having one surface provided with an opening section (210); and a cover (22) configured to cover the opening section (210). The through hole (201) is formed in the body (21) and is continuous with the opening section (210).

This aspect enables the power supply cable (54) of the charger (5) to be easily routed through the through hole (201).

A toolbox (1) of a fifth aspect referring to the first or second aspect further includes a connector (202) provided at the electric path penetration part (20) and configured to electrically connect the charger (5) to the external power supply (9).

According to this aspect, a through hole for routing the power supply cable (54) of the charger (5) does no longer have to be formed in the case (2), and thus it is possible to improve the waterproof properties and the dust-proof properties of the battery pack (4) and the charger (5) while charging is in progress.

In a toolbox (1) of a sixth aspect referring to any one of the first to fifth aspects, the case (2) has a light outgoing part (223) through which light indicating a charge state of the battery pack (4) by the charger (5) goes to an outer side of the case (2).

This aspect enables the charge state of the battery pack (4) to be checked in a state where the charger (5) and the battery pack (4) are accommodated in the case.

A toolbox (1) of a seventh aspect referring to any one of the first to sixth aspects further includes a sensor (71) and a charge controller (65). The sensor (71) is configured to sense movement of the case (2). The charge controller (65) is configured to stop charging operation performed by the charger (5) when the sensor (71) senses the movement of the case (2).

According to this aspect, power receiving operation is stopped when movement of the case (2) is caused, and therefore, it is possible to improve security.

A charge system (101) of an eighth aspect includes a toolbox (1) of any one of the first to seventh aspect and the charger (5).

With this aspect, in the toolbox (1), the charger (5) can be connected to the external power supply (9) via the electric path penetration part (20), and therefore, the battery pack (4) can be charged in a state where the charger (5) and the battery pack (4) is accommodated in the case (2), and thus, it is possible to improve the waterproof properties and the dust-proof properties of the battery pack (4) and the charger (5) while charging is in progress.

### Reference Signs List

- 1: TOOLBOX
- 2: CASE (FIRST CASE)
- 20: ELECTRIC PATH PENETRATION PART
- 201: THROUGH HOLE
- 202: CONNECTOR
- 21: BODY
- 210: OPENING SECTION
- 22: COVER
- 223: LIGHT OUTGOING PART
- 3: POWER TOOL
- 4: BATTERY PACK
- 5: CHARGER
- 6: CONNECTOR
- 65: CHARGE CONTROLLER
- 9: EXTERNAL POWER SUPPLY
- 71: SENSOR
- 101: CHARGE SYSTEM

## Claims

1. A toolbox (1), comprising:
a case (2) in which a power tool (3), a battery pack (4) configured to supply electric power to the power tool (3), and a charger (5) configured to charge the battery pack (4) with electric power supplied from an external power supply (9) are to be accommodated,
the case (2) has an electric path penetration part (20) through which an electric path extends from an inner side through an outer side of the case (2), **characterized by**
the toolbox (1) further comprising a magnet socket (202) provided at the electric path penetration part (20) and configured to electrically connect the charger (5) to the external power supply (9).

2. The toolbox (1) of claim 1 further comprising a connector (6) configured to electrically connect the battery pack (4) and the charger (5) to each other accommodated in the case (2).

3. The toolbox (1) of claim 1 or 2, wherein
the electric path penetration part (20) is a through hole (201) formed in the case (2).

4. The toolbox (1) of claim 3, wherein
the case (2) includes
a body (21) having one surface provided with an opening section (210) and
a cover (22) configured to cover the opening section (210), and
the through hole (201) is formed in the body (21) and is continuous with the opening section (210).

5. The toolbox (1) of any one of claims 1 to 4, wherein
the case (2) has a light outgoing part (223) through which light indicating a charge state of the battery pack (4) by the charger (5) goes to an outer side of the case (2).

6. The toolbox (1) of any one of claims 1 to 5, further comprising:
a sensor (71) configured to sense movement of the case (2); and
a charge controller (65) configured to stop charging operation performed by the charger (5) when the sensor (71) senses the movement of the case (2).

7. A charge system (101), comprising:
the toolbox (1) of any one of claims 1 to 6; and
the charger (5).

## Patentansprüche

1. Werkzeugkasten (1), aufweisend:
ein Gehäuse (2), in dem ein Elektrowerkzeug (3), eine Batterieeinheit (4), die so konfiguriert ist, dass sie das Elektrowerkzeug (3) mit elektrischer Energie versorgt, und ein Ladegerät (5) untergebracht werden können, das so konfiguriert ist, dass es die Batterieeinheit (4) mit elektrischer Energie, welche von einem externen Stromversorgungssystem (9) zugeführt wird, auflädt,
das Gehäuse (2) einen Durchdringungsabschnitt (20) für einen elektrischen Pfad aufweist, durch den sich ein elektrischer Pfad von einer Innenseite zu einer Außenseite des Gehäuses (2) erstreckt, **dadurch gekennzeichnet, dass**
der Werkzeugkasten (1) ferner eine magnetische Anschlussdose (202) aufweist, die an dem Durchdringungsabschnitt (20) für einen elektrischen Pfad vorgesehen und so konfiguriert ist, dass er das Ladegerät (5) elektrisch mit dem externen Stromversorgungssystem (9) verbindet.

2. Werkzeugkasten (1) nach Anspruch 1, ferner aufweisend einen Verbinder (6), der so konfiguriert ist, dass er die Batterieeinheit (4) und das Ladegerät (5), die in dem Gehäuse (2) untergebracht sind, elektrisch miteinander verbindet.

3. Werkzeugkasten (1) nach Anspruch 1 oder 2, wobei
der Durchdringungsabschnitt (20) für einen elektrischen Pfad ein Durchgangsloch (201) ist, das in dem Gehäuse (2) ausgebildet ist.

4. Werkzeugkasten (1) nach Anspruch 3, wobei
das Gehäuse (2) umfasst:
einen Körper (21) mit einer Oberfläche, die mit einem Öffnungsabschnitt (210) versehen ist, und
eine Abdeckung (22), die so konfiguriert ist, dass sie den Öffnungsabschnitt (210) abdeckt, und
das Durchgangsloch (201) in dem Körper (21) ausgebildet ist und mit dem Öffnungsabschnitt (210) durchgängig ist.

5. Werkzeugkasten (1) nach einem der Ansprüche 1 bis 4, wobei
das Gehäuse (2) einen lichtaustretenden Abschnitt (223) aufweist, durch den Licht, das einen Ladezustand des Batteriepacks (4) durch das Ladegerät (5) anzeigt, zu einer Außenseite des Gehäuses (2) geleitet wird.

6. Werkzeugkasten (1) nach einem der Ansprüche 1 bis 5, ferner aufweisend:
einen Sensor (71), der so konfiguriert ist, dass er Bewegung des Gehäuses (2) erfasst; und
eine Ladesteuervorrichtung (65), die so konfiguriert ist, dass sie den vom Ladegerät (5) durchgeführten Ladevorgang stoppt, wenn der Sensor (71) die Bewegung des Gehäuses (2) erfasst.

7. Ladesystem (101), aufweisend:
einen Werkzeugkasten (1) nach einem der Ansprüche 1 bis 6; und
das Ladegerät (5).

## Revendications

1. Boîte à outils (1), comprenant :
un boîtier (2), dans lequel un outil électrique (3), un bloc-batterie (4) configuré pour alimenter l'outil électrique (3) en énergie électrique, et un chargeur (5) configurer pour charger le bloc-batterie (4) en énergie électrique fournie depuis un système d'alimentation électrique externe (9) peuvent être logés,
le boîtier (2) présente une partie de pénétration de trajet électrique (20), à travers laquelle un trajet électrique s'étend depuis un côté intérieur vers un côté extérieur du boîtier (2), **caractérisée en ce que**
la boîte à outils (1) comprend en outre une prise magnétique (202) prévue sur la partie de pénétration de trajet électrique (20) et configurée pour connecter électriquement le chargeur (5) au système d'alimentation électrique externe (9).

2. Boîte à outils (1) selon la revendication 1, comprenant en outre un connecteur (6) configuré pour connecter électriquement le bloc-batterie (4) et le chargeur (5) l'un à l'autre, logés dans le boîtier (2).

3. Boîte à outils (1) selon la revendication 1 ou 2, dans laquelle
la partie de pénétration de trajet électrique (20) est un trou traversant (201) formé dans le boîtier (2).

4. Boîte à outils (1) selon la revendication 3, dans laquelle
le boîtier (2) comporte
un corps (21) présentant une surface prévue avec une section d'ouverture (210), et
un couvercle (22) configuré pour recouvrir la section d'ouverture (210), et
le trou traversant (201) est formé dans le corps (21) et est continu avec la section d'ouverture (210).

5. Boîte à outils (1) selon l'une quelconque des revendications 1 à 4, dans laquelle
le boîtier (2) présente une partie d'émission de lumière (223), par laquelle de la lumière indiquant un état de charge du bloc-batterie (4) par le chargeur (5) est guidée vers un côté extérieur du boîtier (2).

6. Boîte à outils (1) selon l'une quelconque des revendications 1 à 5, comprenant en outre :
un capteur (71) configuré pour détecter un mouvement du boîtier (2) ; et
un dispositif de commande de charge (65) configuré pour arrêter l'opération de charge réalisée par le chargeur (5) lorsque le capteur (71) détecte le mouvement du boîtier (2).

7. Système de charge (101), comprenant :
une boîte à outils (1) selon l'une quelconque des revendications 1 à 6 ; et
le chargeur (5).
